# EUROPÄISCHE PATENTSCHRIFT

(11) **EP 3 177 500 B1**
(45) Veröffentlichungstag und Bekanntmachung des Hinweises auf die Patenterteilung: **10.10.2018**
(21) Anmeldenummer: 15747812.4
(22) Anmeldetag: 06.08.2015
(51) Int. Cl.: B60W 50/00, B60W 10/10, B60W 30/14, B60W 50/14, B60W 10/04

(54) **FAHRERASSISTENZSYSTEM IN EINEM KRAFTFAHRZEUG**
DRIVER ASSISTANCE SYSTEM IN A MOTOR VEHICLE
SYSTÈME D'ASSISTANCE AU CONDUCTEUR DANS UN VÉHICULE AUTOMOBILE

(30) Priorität: 07.08.2014 DE 102014215671
(43) Veröffentlichungstag der Anmeldung: 14.06.2017
(73) Patentinhaber: Bayerische Motoren Werke Aktiengesellschaft, 80809 München (DE)
(72) Erfinder: KAGERER, Walter, 80807 München (DE); KNOLLER, Stefan, 80997 München (DE)
(86) Internationale Anmeldenummer: PCT/EP2015/068182
(87) Internationale Veröffentlichungsnummer: WO 2016/020484

(56) Entgegenhaltungen:
- DE-A1-102007 005 245
- DE-A1-102012 211 967
- DE-A1-102012 213 321
- DE-A1-102013 003 215

## Beschreibung

Die Erfindung bezieht sich auf ein Fahrerassistenzsystem in einem Kraftfahrzeug zur Ermittlung einer Beschleunigungsstrategie und zur automatischen Umsetzung der Beschleunigungsstrategie.

Grundsätzlich sind bereits viele als Geschwindigkeitsregelsystem ausgestaltete Fahrerassistenzsysteme bekannt, welche die Geschwindigkeit des Kraftfahrzeugs auf eine vorgegebene Wunsch- bzw. Soll-Geschwindigkeit regeln. Neben diesen Längsregelsystemen können heute bereits bei einigen Herstellern auch um eine Abstandsregelung erweiterte Längsregelsysteme, sog. abstandsbezogene Längsregelsysteme bzw. Geschwindigkeitsregelsysteme erworben werden. Derartige - bspw. bei der Anmelderin der vorliegenden Patentanmeldung unter der Bezeichnung "Active Cruise Control" - angebotene Systeme ermöglichen es, das Kraftfahrzeug unter Einhaltung eines gewünschten Abstands zu einem vorausfahrendem Fahrzeug mit einer gewünschten oder einer entsprechend geringeren Geschwindigkeit automatisch zu führen. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit - bspw. durch Veranlassen eines geeigneten Bremsmoments - an die Geschwindigkeit des vorausfahrenden Kraftfahrzeugs bzw. des Zielobjekts derart angepasst, dass eine in der "aktiven Fahrgeschwindigkeitsreglung" bzw. im entsprechenden Längsregelsystem enthaltene Abstandsregelung automatisch einen situationsgerechten Abstand zum vorausfahrenden Kraftfahrzeug bzw. Zielobjekt einregelt und einhält. Nach Beendigung der Folgefahrt wird wieder auf die vorgegebene Wunschgeschwindigkeit beschleunigt. Weiter sind sog. Geschwindigkeitsbegrenzungssysteme bekannt, welche ein Überschreiten der vom Fahrer eingestellten Geschwindigkeit verhindern.

Das gattungsbildende Dokument DE 10 2012 211 967 A1 beschreibt eine Kombination aus einem Geschwindigkeitsbegrenzungssystem und einem Geschwindigkeitsregelsystem, wobei die Höchstgeschwindigkeit des Geschwindigkeitsbegrenzungssystems anstelle der einstellten Setzgeschwindigkeit als (neue) Sollgeschwindigkeit für die Geschwindigkeitsregelung übernehmbar ist.
Schließlich gibt es in neueren Fahrzeugen auch Fahrerassistenzsysteme, welche entweder aus Kartendaten eines Navigationssystems und/oder mittels Bildverarbeitung vorausschauend eine Geschwindigkeitsbegrenzung erkennen und dem Fahrer dauerhaft anzeigen können, so dass dieser selbständig bei Bedarf seine Geschwindigkeit an die Geschwindigkeitsbegrenzung anpassen kann (z. B. BMW Speed Limit Info).
Aus der DE 10 2008 018 421 A1 ist ein Fahrerassistenzsystem zum Senden und Empfangen von Geschwindigkeitsdaten und/oder Verkehrsdichtedaten zur Steuerung einer Geschwindigkeitsregelanlage bekannt, welches anhand der empfangenen Daten eine zulässige Höchstgeschwindigkeit ermittelt und diese dem Fahrer durch Ausgabe eines entsprechenden Hinweises mitteilt. Der Fahrer kann diese Vorgabe der zulässigen Geschwindigkeit durch eine einfache Betätigung für seine Geschwindigkeitsregelanlage übernehmen. Ebenso wird bei Ausfahrt aus der Geschwindigkeitslimitierung dies dem Fahrer angezeigt.

Aufgabe der Erfindung ist nun, ein Fahrerassistenzsystem bereitzustellen, welches bei einer Beendigung einer Geschwindigkeitslimitierung eine für den Fahrer angenehme und nachvollziehbare Beschleunigungsstrategie ermittelt und ggf. umsetzt.

Diese Aufgabe wird durch ein Fahrerassistenzsystem nach Patentanspruch 1 gelöst. Vorteilhafte Weiterbildungen ergeben sich aus den abhängigen Ansprüchen.

Das erfindungsgemäße Fahrerassistenzsystem umfasst im Wesentlichen drei Kernelemente:
- ein Erfassungssystem zum Erkennen vorausliegender Ereignisse, die aufgrund einer Aufhebung einer aktuell gültigen Geschwindigkeitslimitierung eine Erhöhung der aktuellen Geschwindigkeit (auf eine neue höhere Zielgeschwindigkeit) erlauben,
- ein Hinweissystem zum Ausgeben eines Aufforderungshinweises an den Fahrer zum Zulassen einer automatischen Umsetzen der Beschleunigungsstrategie, und
- eine Funktionseinheit zum Ermitteln einer Beschleunigungsstrategie zur Erhöhung der Geschwindigkeit.

Erst wenn der Fahrer durch eine entsprechende Bestätigung des Aufforderungshinweises die automatische Umsetzung der Beschleunigungsstrategie zulässt, veranlasst die Funktionseinheit die automatische Umsetzung der Beschleunigungsstrategie durch Aussenden entsprechender Steuersignale an die Antriebs- und/oder Bremseinheit.

Die relevanten vorausliegenden Ereignisse, welche eine Erhöhung der aktuellen Geschwindigkeit erlauben, können entweder aus Kartendaten eines Navigationssystems und/oder mittels Bildverarbeitung einer vorausschauenden Sensorik und/oder mittels einer Car-to-X-Kommunikationseinheit durch Empfang relevanter Daten von anderen Fahrzeugen oder von Verkehrszeichen oder Verkehrsleitsystemen erkannt werden. Bei den vorausliegenden Ereignissen kann es sich somit bspw. um die Aufhebung temporärer oder dauerhafter Geschwindigkeitsbegrenzungen handeln, welche entweder direkt auf einem Verkehrszeichen angegeben sind, oder aufgrund der allgemeinen Verkehrsregeln daraus abzuleiten sind (z. B. gilt in Deutschland bei einer Orts-Durchfahrt eine Geschwindigkeitsbegrenzung auf 50 km/h). Die für die Beschleunigungsstrategie maßgebliche Zielgeschwindigkeit nach dem Ort des vorausliegenden Ereignisses kann entweder die an das Aufhebungsschild anschließende (höhere) maximal erlaubte Geschwindigkeit oder eine um einen vorgegebenen Betrag nach oben oder unten abweichende Geschwindigkeit sein, wobei der Betrag und die Richtung der Abweichung bspw. durch den Fahrer in einem zentralen Fahrzeugmenü einstellbar sein kann. Ebenso kann die zu erreichende Geschwindigkeit auch eine vom Fahrer vorgegebene Wunsch- bzw. Sollgeschwindigkeit sein, insbesondere dann, wenn die vom Fahrer vorgegebene Wunsch- bzw. Sollgeschwindigkeit kleiner als eine nach dem die aktuelle Geschwindigkeitslimitierung aufhebenden Ereignis erlaubte Maximalgeschwindigkeit ist.

Bei der Erfindung wird davon ausgegangen, dass sich das Fahrzeug zunächst entweder aufgrund einer aktiven, die Geschwindigkeitslimitierung berücksichtigenden Geschwindigkeitsbegrenzung(z. B. Speed Limit Device) mit einer entsprechenden begrenzten Anfangsgeschwindigkeit oder aufgrund einer aktiven, allgemein bekannten Geschwindigkeitsregelung (z.B. ACC) mit der entsprechenden Anfangsgeschwindigkeit bewegt.

Die Erfindung basiert weiter auf dem Grundsatz, dass bei einer im Vorfeld erkannten zukünftigen Beendigung einer Geschwindigkeitslimitierung grundsätzlich ein Angebot zur automatischen Geschwindigkeitserhöhung nur sehr eingeschränkt erfolgen darf, da stets gewährleistet werden muss, dass innerhalb des Bereichs der (noch bestehenden) Geschwindigkeitslimitierung die zulässige Höchstgeschwindigkeit aufgrund der Verkehrsregeln nicht (oder nur sehr gering) überschritten werden darf. Weiter ist jedoch auch bekannt, dass ein normaler Fahrer sein Fahrzeug bereits vor dem Erreichen des Aufhebungsschildes leicht beschleunigt und ab dem Aufhebungsschild durch eine entsprechende Pedalbetätigung ein schnelles Erreichen der neuen zulässigen Höchstgeschwindigkeit oder seiner Wunschgeschwindigkeit wünscht.

Unter Berücksichtigung obiger Erkenntnis ist erfindungsgemäß vorgesehen, dass der Aufforderungshinweis an den Fahrer bereits zu einem definierten Zeitpunkt vor Erreichen des die aktuelle Geschwindigkeitslimitierung aufhebenden vorausliegenden Ereignisses ausgebbar ist und die Funktionseinheit bei Bestätigung des Aufforderungshinweises vor dem Erreichen des die aktuelle Geschwindigkeitslimitierung aufhebenden vorausliegenden Ereignisses eine als zweistufige Beschleunigungsstrategie aufgebaute Beschleunigungsstrategie veranlasst. Die Funktionseinheit ermittelt bereits vor Erreichen des die Geschwindigkeitslimitierung aufhebenden Ereignisses eine entsprechende Beschleunigungsstrategie, welche bei einer vom Fahrer gewünschten automatische Umsetzung vor dem relevanten Ereignis zum einen ein für den Fahrer nachvollziehbares Beschleunigungsverhalten zeigt, gleichzeitig jedoch auch den bestehenden Verkehrsregeln in nachvollziehbarer Weise Rechnung trägt. Dazu wird erfindungsgemäß zunächst als Beschleunigungsstrategie eine zweistufige Beschleunigungsstrategie ermittelt, welche zumindest in angepasster Form umgesetzt wird, falls der Fahrer den Aufforderungshinweis vor dem Erreichen des die aktuelle Geschwindigkeitslimitierung aufhebenden vorausliegenden Ereignisses bestätigt. Vorteilhafterweise wird dabei in der ersten Stufe der zweistufigen Beschleunigungsstrategie eine geringere Beschleunigung veranlasst, als in der zweiten Stufe der zweistufigen Beschleunigungsstrategie.

Weiter ist die Beschleunigungsstrategie vorteilhafterweise derart aufgebaut, dass die erste Stufe der zweistufigen Beschleunigungsstrategie bis zum Ort des vorausliegenden Ereignisses, an dem die aktuell gültige Geschwindigkeitslimitierung aufgehoben wird, umgesetzt wird und die zweite Stufe der zweistufigen Beschleunigungsstrategie erst ab dem Erreichen des vorausliegenden Ereignisses, an dem die aktuell gültige Geschwindigkeitslimitierung aufgehoben wird. Mit anderen Worten wird somit am Ort des vorausliegenden Ereignisses, an dem die aktuell gültige Geschwindigkeitslimitierung aufgehoben wird, vom ersten Beschleunigungsprogramm (= erste Stufe der zweistufigen Beschleunigungsstrategie) auf ein zweites Beschleunigungsprogramm (= zweite Stufe der zweistufigen Beschleunigungsstrategie) umgeschaltet. In dem ersten Beschleunigungsprogramm ist abgebildet, dass das Angebot zur Geschwindigkeitserhöhung nur eine applizierbare Strecke vor dem Aufhebungsschild erfolgt. Wenn der Fahrer dann durch eine entsprechende Bedienelementbetätigung die automatische Umsetzung der Beschleunigungsstrategie zulässt, wird die Beschleunigung genau so eingestellt, dass am Ort des Aufhebungsschildes die dort endende Geschwindigkeitslimitierung nur um einen geringen - ggf. einstellbaren - Betrag überschritten wird. Das zweite Beschleunigungsprogramm wird dagegen nach dem Aufhebungsschild so eingestellt, dass die Beschleunigung auf die neue Zielgeschwindigkeit zum einen komfortabel erfolgt, gleichzeitig aber auch die Geschwindigkeitsdifferenz möglichst schnell eingeregelt wird. Mit einer entsprechend gewählten Beschleunigung in den beiden Beschleunigungsprogrammen kann somit sichergestellt werden, dass der Fahrer bis zum Aufhebungsschild bereits eine leichte Beschleunigung des Fahrzeugs erfährt und erst ab dem Aufhebungsschild eine Beschleunigung des Fahrzeugs auf die neue, höhere Zielgeschwindigkeit vorgenommen wird.

Vorteilhafterweise wird der definierte Zeitpunkt, zu dem der Aufforderungshinweis ausgegeben wird, in Abhängigkeit vorgegebener Parameter, insbesondere in Abhängigkeit von der Distanz zum Ort des vorausliegenden Ereignisses und/oder in Abhängigkeit von der Differenzgeschwindigkeit aus aktueller Geschwindigkeit oder der aufgrund der Geschwindigkeitslimitierung zugelassenen Höchstgeschwindigkeit und einer nach Aufhebung der Geschwindigkeitslimitierung erlaubten oder gewünschten Zielgeschwindigkeit ermittelt und entsprechend ausgegeben. Insbesondere kann der definierte Zeitpunkt, zu dem der Aufforderungshinweis ausgegeben wird, derart vorgegebenen werden, dass der Aufforderungshinweise bei einer vorgegebenen Distanz zum Ort des vorausliegenden Ereignisses ausgegeben wird so dass bei einer Bestätigung durch den Fahrer eine automatische Umsetzung der Beschleunigungsstrategie erfolgen kann.

Wie bereits oben erwähnt, wird in einer weiteren vorteilhaften Ausgestaltung der Erfindung in der ersten Stufe der zweistufigen Beschleunigungsstrategie eine derartige Beschleunigung veranlasst, dass am Ort des vorausliegenden Ereignisses die dort aufgehobene Geschwindigkeitslimitierung lediglich um einen vorgegebenen, vorteilhafterweise einstellbaren, geringen Geschwindigkeitsbetrag überschritten wird. Der möglicherweise einstellbare Geschwindigkeitsoffset kann bspw. mittels eines zentralen Bedienelements durch eine entsprechende Offsetwahl gewählt werden, so dass sie für alle weiteren Beschleunigungsstrategien herangezogen werden kann. Falls gewünscht, kann auch eingestellt werden, dass am Ort des vorausliegenden Ereignisses die dort ausgehobene Geschwindigkeitslimitierung noch nicht überschritten wird.

Im Gegensatz zur Beschleunigung in der ersten Stufe kann in der zweiten Stufe der zweistufigen Beschleunigungsstrategie eine derartige Beschleunigung veranlasst werden, dass eine nach Aufhebung der Geschwindigkeitslimitierung erlaubte oder gewünschte Zielgeschwindigkeit innerhalb kürzest möglicher Zeit oder innerhalb eines vorgegebenen Zeitfensters erreicht wird, wobei vorteilhafterweise eine vorgegebene maximale Beschleunigung nicht überschritten werden darf. Vorteilhafterweise kann dabei in der zweiten Stufe der zweistufigen Beschleunigungsstrategie die Beschleunigung in Abhängigkeit von der Differenzgeschwindigkeit aus aktueller Geschwindigkeit und einer nach Aufhebung der Geschwindigkeitslimitierung erlaubten oder gewünschten Zielgeschwindigkeit und/oder in Abhängigkeit eines aktuellen Betriebsmodus des Fahrzeugs (z. B. Sportmodus, Comfortmodus oder ECO-Modus) vorgegeben werden.

Vorteilhafterweise kann im Rahmen der zweistufigen Beschleunigungsstrategie bei der Vorgabe der Beschleunigung auch ein möglicher Eingriff in die Getriebesteuerung berücksichtigt werden, so dass eine vorgegebene bzw. gewollte Getriebesteuerung eingehalten wird. So kann in der ersten Stufe der zweistufigen Beschleunigungsstrategie eine derartige Beschleunigung angefordert werden, dass eine Rückschaltung des Getriebes des Fahrzeugs vermieden wird oder ein derartiger Eingriff in die Getriebesteuerung des Fahrzeugs vorgenommen werden, dass eine möglicherweise aufgrund des Beschleunigungswunsches vorliegende Rückschaltanforderung unterbunden wird. Im Gegensatz dazu kann in der zweiten Stufe der zweistufigen Beschleunigungsstrategie eine derartige Beschleunigung angefordert wird, dass eine Rückschaltung des Getriebes angefordert und umgesetzt wird, d. h. es wird bewusst eine Beschleunigung angefordert, die eine Rückschaltung des Getriebes erfordert. Damit wird die erste Beschleunigung sanft gestellt und erst am Ort des vorausliegenden Ereignisses (beim Übergang in die zweite Beschleunigungsstufe) durch die Rückschaltung ein entsprechender Dynamikeindruck unterstützt.

Grundsätzlich können bei der Ermittlung der Beschleunigungsstrategie neben den maßgeblichen Rahmenbedingungen wie z. B. Differenzgeschwindigkeit zwischen der aktuellen Geschwindigkeit und der Zielgeschwindigkeit, Abstand zum Ort des maßgeblichen vorausliegenden Ereignissen und/oder gewünschte Zielgeschwindigkeit auch weitere Kriterien berücksichtigt werden, welche einen Einfluss auf die Beschleunigungswirkung des Fahrzeugs haben. Bei den Einflussfaktoren kann es sich insbesondere um aktuelle Einflussfaktoren handeln, es können aber auch bereits bekannte, zukünftig auftretende und die Beschleunigung beeinflussende Einflussfaktoren, die bis zum Ort des vorausliegenden Ereignisses oder auch in der anschließenden Beschleunigungsphase auftreten werden, berücksichtigt werden. Bspw. kann es sich um die Straßenneigung, um Wind- und sonstige Wetterverhältnisse, die aktuelle Beladung des Fahrzeugs oder Ähnliches handeln.

Die Erfindung wird nun anhand nachfolgenden Ausführungsbeispiels näher erläutert. Dabei zeigt
Fig. 1 einen beispielhaften Aufbau einer Fahrerassistenzsystems in einem Kraftfahrzeug zur Ermittlung einer Beschleunigungsstrategie und automatischer Umsetzung der Beschleunigungsstrategie, und
Fig. 2 ein Beispiel einer ermittelten und automatisch umgesetzten Beschleunigungsstrategie.

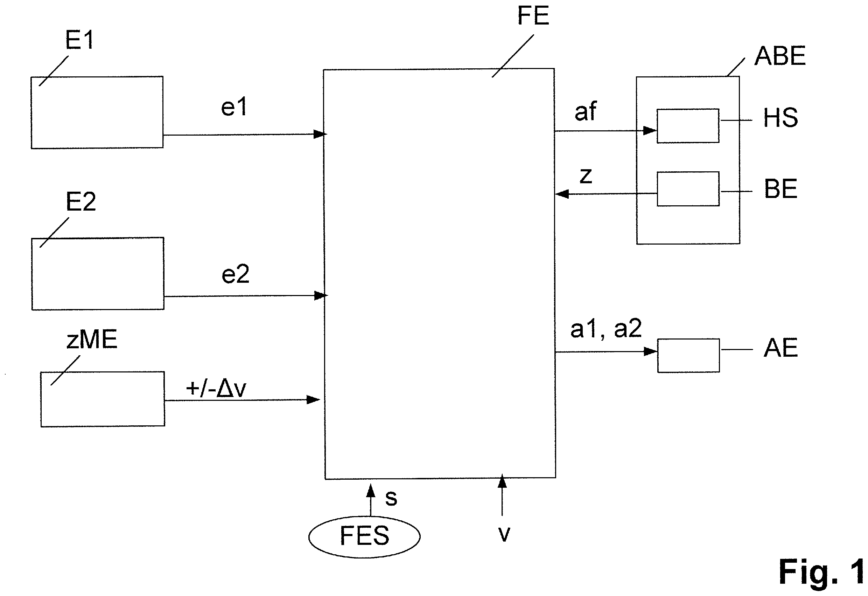

Im Detail zeigt die Fig. 1 als zentrales Element des Fahrerassistenzsystems eine Funktionseinheit FE, welche Eingangssignale e1 einer ersten Erfassungseinheit E1, Eingangssignale e2 einer zweiten Erfassungseinheit E2, ein Geschwindigkeitssignal v, ein Statussignal s eines Fahrerlebnisschalters FES und ein Zulassungssignal z zum Zulassen einer automatischen Umsetzung einer ermittelten Beschleunigungsstrategie erhält.

Bei der ersten Erfassungseinheit E1 kann es sich bspw. um eine am Fahrzeug angebrachte und nach vorne ausgerichtete (Video-) Sensorik handeln, welche vorausliegende, eine Geschwindigkeitsbegrenzung aufhebende Ereignisse erkennt, die eine Erhöhung der aktuellen Geschwindigkeit auf eine höhere Zielgeschwindigkeit zulassen. Bei der zweiten Erfassungseinheit E2 kann es sich bspw. um ein fahrzeuginternes Navigationssystem handeln, welches in Abhängigkeit der bekannten Position des Fahrzeugs und einem vorausliegenden Streckenabschnitt vorausliegende, eine Geschwindigkeitsbegrenzung aufhebende Ereignisse erkennt. Sowohl die erste Erfassungseinheit E1 als auch die zweite Erfassungseinheit E2 sind derart ausgestaltet, dass sie zum einen den Ort des vorausliegenden, eine Geschwindigkeitsbegrenzung aufhebende Ereignisses, also auch die tatsächliche Geschwindigkeitsbegrenzung erkennen und an die Funktionseinheit FE weitergeben können. Idealerweise erkennen die Erfassungseinheiten E1 oder E2 auch eine nach der Aufhebung der aktuellen Geschwindigkeitslimitierung geltende neue zulässige Höchstgeschwindigkeit. Alternativ kann anstelle der neuen zugelassenen Höchstgeschwindigkeit auch eine vom Fahrer vorgegebene gewünschte (neue) Höchstgeschwindigkeit an die Funktionseinheit FE übertragen werden.

Weiter erhält die Funktionseinheit FE von einer im Fahrzeug angeordneten zentralen Menüeinheit zME ein Signal +/- Δv, welches angibt, mit welcher vom Fahrer vorgegebenen Abweichung nach oben oder unten die zu erreichende Geschwindigkeit am Ort des die Geschwindigkeitslimitierung aufhebenden Ereignisses aus der tatsächlichen Geschwindigkeitsbegrenzung am Aufhebungsschild zu ermitteln ist. Diese Vorgabe kann vom Fahrer jederzeit verändert werden.

Schließlich erhält die Funktionseinheit FE noch weitere relevante Daten s, aus denen sie ermitteln kann, welcher Fahrmodus aktuelle gewählt ist. Als Beispiel ist hier die Funktionseinheit FE mit einem sog. Fahrerlebnisschalter FES verbunden, mittels dem der Fahrer einen Betriebsmodus des Fahrzeugs auswählen kann. Hat der Fahrer bspw. den Sportmodus ausgewählt, so wünscht er grundsätzlich eine schnellere Beschleunigung und ggf. auch eine größere Geschwindigkeitsüberschreitung der erlaubten Maximalgeschwindigkeit am Ort des Aufhebungsschildes, als wenn der Fahrer einen sog. Eco-Modus gewählt hat, bei dem er besonders verbrauchssparend fahren und auch beschleunigen möchte.

Sobald der Funktionseinheit FE relevante Daten e1 und/oder e2 über ein vorausliegendes, eine Geschwindigkeitsbegrenzung aufhebende Ereignis und Informationen über die nach dem Aufhebungsschild gewünschte neue Zielgeschwindigkeit vorliegen, kann die Funktionseinheit FE zunächst unter Berücksichtigung der Fahrervorgabe aus der zentralen Menüeinheit zME die (Zwischen-)Zielgeschwindigkeit am Ort des vorausliegenden Ereignisses ermitteln und anschließend in Abhängigkeit von der erlaubten Beschleunigung in einer ersten Beschleunigungsstufe, die bis zum Erreichen des Aufhebungsschildes umgesetzt werden soll, einen idealen Zeitpunkt für die Ausgabe eines Aufforderungshinweises zum Zulassen einer automatischen Umsetzung der Beschleunigungsstrategie ermitteln.

Anhand des ermittelten Zeitpunktes bzw. dem Abstand zum Aufhebungsschild veranlasst die Funktionseinheit FE durch ein entsprechendes Signal af an eine Anzeigebedieneinheit ABE, welche ein Hinweissystem HS und ein Bedienelement BE umfasst, die Ausgabe eines Aufforderungssignals. Gleichzeitigt passt die Funktionseinheit FE ab dem Zeitpunkt, zu dem der Aufforderungshinweis ausgegeben wird, kontinuierlich die erste Stufe der zweistufigen Beschleunigungsstrategie an, so dass auch bei kontinuierlich kürzer werdendem Abstand oder sich verändernder aktueller Geschwindigkeit v die (Zwischen-)Zielgeschwindigkeit am Ort des vorausliegenden Ereignisses erreicht werden kann.

Sobald der Fahrer durch Betätigung des Bedienelements BE das Aufforderungssignal bestätigt, sendet die Anzeigebedieneinheit ABE ein entsprechendes "Zulassungs"-Signal z an die Funktionseinheit FE zurück. Daraufhin beginnt die Funktionseinheit FE mit dem Einleiten der automatischen Umsetzung der (zuletzt ermittelten) ersten Stufe der Beschleunigungsstrategie durch Veranlassen eines entsprechenden Steuersignals a1 an die Antriebseinheit AE. Während der Ansteuerung wird die vorgegebene erste Beschleunigung der zweistufigen Beschleunigungsstrategie weiterhin an die aktuelle Situation angepasst und entsprechend umgesetzt, so dass am Ort des vorausliegenden Ereignisses die (Zischen-)Zielgeschwindigkeit erreicht wird. Falls zum Zeitpunkt, zu dem der Fahrer die automatische Umsetzung durch Betätigung des Bedienelement BE zulässt, die Distanz zwischen dem Fahrzeug und dem Aufhebungsschild sehr kurz ist, so dass eine Erreichung der etwas höheren (Zwischen-)Zielgeschwindigkeit nur mit großer Beschleunigung möglich wäre, kann auch unabhängig von der erlaubten (Zwischen-) Zielgeschwindigkeit am Ort des Aufhebungsschildes das Fahrzeug nur mit einer geringeren Beschleunigung beschleunigt werden.

Sobald das Aufhebungsschild erreicht ist, veranlasst die Funktionseinheit FE eine Umsetzung der (zuvor) ermittelten zweiten Stufe der zweistufigen Beschleunigungsstrategie durch Aussenden eines zweiten Beschleunigungssignals a2 an die Antriebseinheit AE, so dass die Zielgeschwindigkeit entsprechend den Bedürfnissen des Fahrers und unter Berücksichtigung einer maximal erlaubten Beschleunigung innerhalb kürzester Zeit erreicht wird.

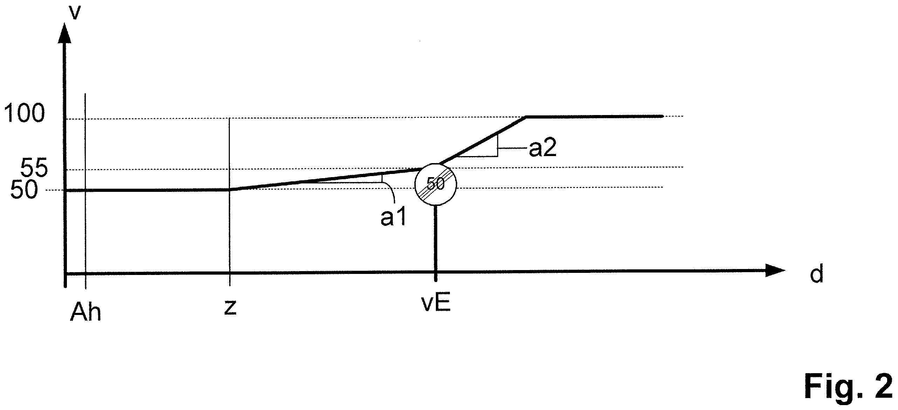

Anhand der nachfolgenden Beschreibung zu Fig. 2 wird nun ein Beispiel einer umgesetzten zweistufigen Beschleunigungsstrategie dargestellt. Die Fig. 2 zeigt eine Strecke d, wobei am Ort vE ein Aufhebungsschild einer Geschwindigkeitsbegrenzung von 50 km/h angeordnet ist. Nach dem Aufhebungsschild soll mit einer vom Fahrer vorgegebenen Zielgeschwindigkeit von 100 km/h gefahren werden.

Weiter wird davon ausgegangen, dass sich das dem Aufhebungsschild annähernde Fahrzeug mit einer konstanten Geschwindigkeit von 50 km/h bewegt. Der Vollständigkeit halber wird darauf hingewiesen, dass sich das Fahrzeug zu diesem Zeitpunkt entweder aufgrund einer aktiven, die Geschwindigkeitslimitierung berücksichtigenden Geschwindigkeitsbegrenzung(z. B. Speed Limit Device) mit der entsprechenden Anfangsgeschwindigkeit von 50 km/h oder einer aktiven, die Geschwindigkeitslimitierung berücksichtigende Geschwindigkeitsregelung (z.B. ACC) mit dieser Geschwindigkeit bewegt.

Zum Zeitpunkt, an dem das Fahrzeug die Position "Ah" (definiert durch Vorgabe eines Distanz zu dem Aufhebungsschild) erreicht hat, wird ein einsprechender Aufforderungshinweis an den Fahrer ausgegeben, bei dessen Bestätigung eine automatische Umsetzung der ermittelten zweistufigen Beschleunigungsstrategie umgesetzt wird. Eine Zulassung der automatischen Umsetzung erfolgt am angegebenen Ort "z".

Nachdem der Fahrer die automatische Umsetzung zugelassen hat, beschleunigt das Fahrzeug zunächst mit einer vorgegebenen ersten Beschleunigung a1, so dass am Ort vE des Aufhebungsschildes eine geringe Überschreitung der zulässigen Maximalgeschwindigkeit (immer noch 50 km/h) erreicht wird. Ab dem Ort vE des Aufhebungsschildes wechselt die Funktionseinheit von der ersten Beschleunigungsstufe in die zweite Beschleunigungsstufe. Im Rahmen dieser zweiten Beschleunigungsstufe wird das Fahrzeug mit einer gegenüber der ersten Beschleunigung a1 erhöhten Beschleunigung a2 beschleunigt, so dass die gewünschte Zielgeschwindigkeit vom 100 km/h innerhalb einer sehr kurzen Zeit erreicht wird. Die Höhe der zweiten Beschleunigung a2 kann entweder fest oder in Abhängigkeit des aktuellen Betriebsmodus vorgegeben werden.

Durch das hier beschriebene Fahrerassistenzsystem kann dem Fahrer bereits frühzeitig, also vor Erreichen des Aufhebungsschildes das Angebot zur automatischen Beschleunigung des Fahrzeugs auf die zukünftig geltenden Zielgeschwindigkeit angeboten werden, ohne dass das aktuelle Geschwindigkeitslimit bereits vor der Aufhebung wesentlich überschritten wird. Somit kann das Fahrverhalten eines durchschnittlichen Fahrers optimal nachgebildet werden.

## Patentansprüche

1. Fahrerassistenzsystem in einem Kraftfahrzeug mit einem Erfassungssystem zum Erkennen vorausliegender Ereignisse, die aufgrund einer Aufhebung einer aktuell gültigen Geschwindigkeitslimitierung eine Erhöhung der aktuellen Geschwindigkeit erlauben, einer Funktionseinheit zum Ermitteln einer Beschleunigungsstrategie zur Erhöhung der Geschwindigkeit, und mit einem Hinweissystem zum Ausgeben eines Aufforderungshinweises an den Fahrer zum Zulassen einer automatischen Umsetzen der Beschleunigungsstrategie, wobei die Funktionseinheit bei Bestätigung des Aufforderungshinweises durch den Fahrer die automatische Umsetzung der Beschleunigungsstrategie veranlasst, wobei der Aufforderungshinweis (Ah) an den Fahrer zu einem definierten Zeitpunkt vor Erreichen des die aktuelle Geschwindigkeitslimitierung aufhebenden vorausliegenden Ereignisses (vE) ausgebbar ist und **dadurch gekennzeichnet, dass** die Funktionseinheit (FE) bei Bestätigung (z) des Aufforderungshinweises (Ah) vor dem Erreichen des die aktuelle Geschwindigkeitslimitierung aufhebenden vorausliegenden Ereignisses (vE) eine als zweistufige Beschleunigungsstrategie aufgebaute Beschleunigungsstrategie veranlasst.

2. Fahrerassistenzsystem nach Anspruch 1, **dadurch gekennzeichnet, dass** in der ersten Stufe der zweistufigen Beschleunigungsstrategie eine geringere Beschleunigung (a1) veranlasst wird, als in der zweiten Stufe der zweistufigen Beschleunigungsstrategie.

3. Fahrerassistenzsystem nach Anspruch 1 oder 2, **dadurch gekennzeichnet, dass** die erste Stufe der zweistufigen Beschleunigungsstrategie bis zum Ort des vorausliegenden Ereignisses (vE), an dem die aktuell gültige Geschwindigkeitslimitierung aufgehoben wird, umgesetzt wird.

4. Fahrerassistenzsystem nach einem der vorangegangenen Ansprüche, **dadurch gekennzeichnet, dass** die zweite Stufe der zweistufigen Beschleunigungsstrategie ab dem Erreichen des vorausliegenden Ereignisses (vE), an dem die aktuell gültige Geschwindigkeitslimitierung aufgehoben wird, umgesetzt wird.

5. Fahrerassistenzsystem nach einem der vorangegangenen Ansprüche, **dadurch gekennzeichnet, dass** der definierte Zeitpunkt, zu dem der Aufforderungshinweis (Ah) ausgegeben wird, in Abhängigkeit vorgegebener Parameter, insbesondere in Abhängigkeit von der Distanz zum Ort des vorausliegenden Ereignisses (vE) und/oder in Abhängigkeit von der Differenzgeschwindigkeit aus aktueller Geschwindigkeit oder der aufgrund der Geschwindigkeitslimitierung zugelassenen Höchstgeschwindigkeit und einer nach Aufhebung der Geschwindigkeitslimitierung erlaubten oder gewünschten Zielgeschwindigkeit ermittelt wird.

6. Fahrerassistenzsystem nach einem der vorangegangenen Ansprüche, **dadurch gekennzeichnet, dass** der definierte Zeitpunkt, zu dem der Aufforderungshinweis (Ah) ausgegeben wird, derart vorgegebenen wird, dass der Aufforderungshinweise (Ah) bei einer vorgegebenen Distanz zum Ort des vorausliegenden Ereignisses (vE) ausgegeben wird.

7. Fahrerassistenzsystem nach einem der vorangegangenen Ansprüche, **dadurch gekennzeichnet, dass** in der ersten Stufe der zweistufigen Beschleunigungsstrategie eine derartige Beschleunigung (a1) veranlasst wird, dass am Ort des vorausliegenden Ereignisses (vE) die dort ausgehobene Geschwindigkeitslimitierung um einen vorgegebenen, vorteilhafterweise einstellbaren, geringen Geschwindigkeitsbetrag (+/-Δv) überschritten wird.

8. Fahrerassistenzsystem nach einem der vorangegangenen Ansprüche, **dadurch gekennzeichnet, dass** in der zweiten Stufe der zweistufigen Beschleunigungsstrategie eine derartige Beschleunigung (a2) veranlasst wird, dass eine nach Aufhebung der Geschwindigkeitslimitierung erlaubte oder gewünschte Zielgeschwindigkeit innerhalb kürzest möglicher Zeit oder innerhalb eines vorgegebenen Zeitfensters erreicht wird, wobei vorteilhafterweise eine vorgegebene maximale Beschleunigung nicht überschritten werden darf.

9. Fahrerassistenzsystem nach einem der vorangegangenen Ansprüche, **dadurch gekennzeichnet, dass** in der zweiten Stufe der zweistufigen Beschleunigungsstrategie die Beschleunigung (a2) in Abhängigkeit von der Differenzgeschwindigkeit aus aktueller Geschwindigkeit und einer nach Aufhebung der Geschwindigkeitslimitierung erlaubten oder gewünschten Zielgeschwindigkeit und/oder in Abhängigkeit eines aktuellen Betriebsmodus (FES) des Fahrzeugs vorgegeben wird.

10. Fahrerassistenzsystem nach einem der vorangegangenen Ansprüche, **dadurch gekennzeichnet, dass** in der ersten Stufe der zweistufigen Beschleunigungsstrategie eine derartige Beschleunigung angefordert wird, dass eine Rückschaltung des Getriebes des Fahrzeugs vermieden wird oder ein derartiger Eingriff in die Getriebesteuerung des Fahrzeugs vorgenommen wird, dass eine Rückschaltanforderung unterbunden wird.

11. Fahrerassistenzsystem nach einem der vorangegangenen Ansprüche, **dadurch gekennzeichnet, dass** in der zweiten Stufe der zweistufigen Beschleunigungsstrategie eine derartige Beschleunigung angefordert wird, dass eine Rückschaltung des Getriebes angefordert und umgesetzt wird.

12. Fahrerassistenzsystem nach einem der vorangegangenen Ansprüche, **dadurch gekennzeichnet, dass** die Funktionseinheit (FE) bei der Ermittlung der Verzögerungsstrategie aktuell vorliegende und/oder zukünftig eintretende Umfeldinformationen berücksichtigt.

## Claims

1. A driver assistance system in a motor vehicle, comprising a detection system for identifying upcoming events which permit an increase in current speed as a result of a lifting of a currently valid speed restriction, a functional unit for determining an acceleration strategy for increasing the speed, and comprising a notification system for outputting a request notification to the driver to allow automatic implementation of the acceleration strategy, wherein the functional unit initiates the automatic implementation of the acceleration strategy upon confirmation of the request notification by the driver, wherein the request notification (Ah) can be output to the driver at a defined time before the upcoming event (vE) lifting the current speed restriction, and **characterised in that** the functional unit (FE) initiates an acceleration strategy, which is formed as a two-stage acceleration strategy, in the case that the request notification (Ah) is confirmed (z) before the upcoming event (vE) lifting the current speed restriction is reached.

2. A driver assistance system according to claim 1, **characterised in that** in the first stage of the two-stage acceleration strategy a slower acceleration (a1) is initiated than in the second stage of the two-stage acceleration strategy.

3. A driver assistance system according to claim 1 or 2, **characterised in that** the first stage of the two-stage acceleration strategy is implemented as far as the location of the upcoming event (vE) that lifts the currently valid speed restriction.

4. A driver assistance system according to any one of the preceding claims, **characterised in that** the second stage of the two-stage acceleration strategy is implemented upon reaching the upcoming event (vE) that lifts the currently valid speed restriction.

5. A driver assistance system according to any one of the preceding claims, **characterised in that** the defined time at which the request notification (Ah) is output is determined depending on predefined parameters, more especially in depending on the distance from the location of the upcoming event (vE) and/or depending on the difference in speed between the current speed or the maximum speed permitted on account of the speed restriction and a target speed permitted or desired once the speed restriction has been lifted.

6. A driver assistance system according to any one of the preceding claims, **characterised in that** the defined time at which the request notification (Ah) is output is predefined in such a way that the request notification (Ah) is output at a predefined distance from the location of the upcoming event (vE).

7. A driver assistance system according to any one of the preceding claims, **characterised in that** in the first stage of the two-stage acceleration strategy an acceleration (a1) is initiated such that the speed restriction lifted at the location of the upcoming event (vE) is exceeded by a predefined, advantageously adjustable, small speed value (+/-Δv).

8. A driver assistance system according to any one of the preceding claims, **characterised in that** in the second stage of the two-stage acceleration strategy an acceleration (a2) is initiated such that a target speed permitted or desired once the speed restriction has been lifted is reached within the shortest time possible or within a predefined time window, wherein advantageously a predefined maximum acceleration must not be exceeded.

9. A driver assistance system according to any one of the preceding claims, **characterised in that** in the second stage of the two-stage acceleration strategy the acceleration (a2) is predefined depending on the difference in speed between the current speed and a target speed permitted or desired once the speed restriction has been lifted and/or depending on a current operating mode (FES) of the vehicle.

10. A driver assistance system according to any one of the preceding claims, **characterised in that** in the first stage of the two-stage acceleration strategy an acceleration is requested such that a downshift of the transmission of the vehicle is avoided or an action is taken in the transmission control of the vehicle such that a downshift request is prevented.

11. A driver assistance system according to any one of the preceding claims, **characterised in that** in the second stage of the two-stage acceleration strategy an acceleration is requested such that a downshift of the transmission is requested and implemented.

12. A driver assistance system according to any one of the preceding claims, **characterised in that** the functional unit (FE) takes into account currently available environment information and/or future environment information when determining the deceleration strategy.

## Revendications

1. Système d'assistance du conducteur dans un véhicule comportant un système de détection permettant d'identifier des événements précédents qui permettent, en raison d'une suppression d'une limitation de vitesse actuellement valable une augmentation de la vitesse actuelle, une unité fonctionnelle permettant de déterminer une stratégie d'accélération pour augmenter la vitesse, ainsi qu'un système d'indication permettant de délivrer une indication d'invitation au conducteur pour permettre une mise en oeuvre automatique de la stratégie d'accélération, lors d'une confirmation de l'indication d'invitation par le conducteur, l'unité fonctionnelle permettant la mise en oeuvre de la stratégie d'accélération,
l'indication d'invitation (Ah) pouvant être délivrée au conducteur à un instant défini avant d'avoir atteint l'événement précédent (vE) supprimant la limitation de vitesse actuelle,
**caractérisé en ce qu'**
en cas de confirmation (z) de l'indication d'invitation (Ah), avant d'avoir atteint l'événement précédent (vE) supprimant la limitation de vitesse actuelle l'unité fonctionnelle (FE) autorise, une stratégie d'accélération réalisée sous la forme d'une stratégie d'accélération à deux étapes.

2. Système d'assistance d'un conducteur conforme à la revendication 1,
**caractérisé en ce que**
lors de la première étape de la stratégie d'accélération à deux étapes, une accélération (a1) plus faible est autorisée que dans la seconde étape de la stratégie d'accélération à deux étapes.

3. Système d'assistance d'un conducteur conforme à la revendication 1 ou 2,
**caractérisé en ce que**
la première étape de la stratégie d'accélération à deux étapes est mise en oeuvre jusqu'au lieu de l'événement précédent (vE) pour lequel la limitation de vitesse actuellement valable est supprimée.

4. Système d'assistance d'un conducteur conforme à l'une des revendications précédentes,
**caractérisé en ce que**
la seconde étape de la stratégie d'accélération à deux étapes est mise en oeuvre à partir de l'atteinte de l'événement précédent (vE) pour lequel la limitation de vitesse actuellement valable est supprimée.

5. Système d'assistance d'un conducteur conforme à l'une des revendications précédentes,
**caractérisé en ce que**
l'instant défini pour lequel l'indication d'invitation (Ah) est délivrée, est déterminé en fonction de paramètres prédéfinis, en particulier de la distance au lieu de l'événement précédent (vE) et/ou en fonction de la différence de vitesse entre de la vitesse actuelle ou la vitesse maximum autorisée en raison de la limitation de vitesse et une vitesse cible permise ou souhaitée après suppression de la limitation de vitesse.

6. Système d'assistance d'un conducteur conforme à l'une des revendications précédentes,
**caractérisé en ce que**
l'instant défini pour lequel l'indication d'indication (Ah) est délivrée est défini de sorte que cette indication (Ah) soit délivrée pour une distance prédéfinie du lieu de l'événement précédent (vE).

7. Système d'assistance d'un conducteur conforme à l'une des revendications précédentes,
**caractérisé en ce que**
lors de la première étape de la stratégie d'accélération à deux étapes, on autorise une accélération (a1) telle que, au lieu de l'événement précédent (vE), la limitation de vitesse qui y est supprimée soit dépassée d'une faible valeur de vitesse prédéfinie (+/-Δv) pouvant avantageusement être réglée.

8. Système d'assistance d'un conducteur conforme à l'une des revendications précédentes,
**caractérisé en ce que**
lors de la seconde étape de la stratégie d'accélération à deux étapes, on autorise une accélération (a2) telle qu'une vitesse cible permise ou souhaitée après la suppression de la limitation de vitesse soit atteinte en un temps le plus court possible ou dans une fenêtre de temps prédéfinie, et de manière avantageuse, une accélération maximum prédéfinie ne doit pas être dépassée.

9. Système d'assistance d'un conducteur conforme à l'une des revendications précédentes,
**caractérisé en ce que**
lors de la seconde étape de la stratégie d'accélération à deux étapes, l'accélération (a2) est prédéfinie en fonction de la différence de vitesse entre la vitesse actuelle et la vitesse cible permise ou souhaitée après la suppression de la limitation de vitesse, et/ou en fonction du mode de fonctionnement actuel (FES) du véhicule.

10. Système d'assistance d'un conducteur conforme à l'une des revendications précédentes,
**caractérisé en ce que**
lors de la première étape de la stratégie d'accélération à deux étapes, on demande une accélération telle qu'un rétrogradage de la boîte de la vitesses du véhicule soit évité ou, l'on agit sur la commande de la boîte de vitesses du véhicule soit effectuée de sorte qu'une demande de rétrogradage soit empêché.

11. Système d'assistance d'un conducteur conforme à l'une des revendications précédentes,
**caractérisé en ce que**
lors de la seconde étape de la stratégie d'accélération à deux étape, on demande une accélération telle qu'un rétrogradage de la boîte de vitesse soit demandé et mis en oeuvre.

12. Système d'assistance d'un conducteur conforme à l'une des revendications précédentes,
**caractérisé en ce que**
lors de la détermination de la stratégie de décélération, l'unité fonctionnelle (FE) prend en considération des informations d'environnement actuellement présentes et/ou futures.
